# EUROPEAN PATENT SPECIFICATION

(11) **EP 3 805 932 B1**
(45) Date of publication and mention of the grant of the patent: **09.09.2026**
(21) Application number: 19202262.2
(22) Date of filing: 09.10.2019
(51) Int. Cl.: G06F 11/34

(54) **DEVICE MONITORING SYSTEM AND METHOD**
VORRICHTUNGSÜBERWACHUNGSSYSTEM UND -VERFAHREN
DISPOSITIF ET PROCÉDÉ DE SURVEILLANCE DE DISPOSITIFS

(43) Date of publication of application: 14.04.2021
(73) Proprietor: Mastercard International Incorporated, Purchase NY 10577 (US)
(72) Inventor: SADLIER, David, Dublin, 16 (IE); SUKUTIS, Vilandas, Dublin, K78 AW97 (IE); GILLIGAN, Robert, Dublin, 7 (IE); YU, Yaxuan, Dublin, D18 W732 (IE)
(74) Representative: Gill Jennings & Every LLP

(56) References cited:
- EP-A1- 3 447 701
- US-B2- 8 261 278

## Description

### Field of Invention

The present invention generally relates to monitoring the performance of a computing device. More specifically, it relates to determining abnormal device behavior.

### Background

In today's world, most of the complex and time-consuming computational tasks are performed by computing devices. When a large volume of data is to be processed continuously, several such devices often work together to perform the task. For example, in banks and other such establishments, thousands of transactions may be processed every minute. A group of computing devices, known as a cluster server, is typically used to process such a high volume of data.

It is necessary to constantly monitor the performance of each device in the cluster server to ensure smooth operation. Specifically, it is important to determine the rate of usage of each device and take corrective measures if a particular device is overloaded. There is often a dedicated device that constantly monitors the device performance. However, such monitoring devices cannot reliably determine abnormal device behavior as it is not possible for them to determine if the high usage of a device is genuine or not, for example, when a device is showing 100% usage for a long time, this could be due to genuine load or an operational error. It is very difficult to monitor the usage of all the devices in the cluster and identify any abnormality with high accuracy.

Even if manual thresholds or usage limits are set, these may be too rigid and likely to restrict the device usage even when the device is functioning optimally but genuinely experiencing high volume of data. This may lead to underutilization of resources and delay processing of data.

Therefore, there exists a need for an efficient and reliable way to monitor such devices and detect any abnormality.

US 8 261 278 B2 discloses an application monitoring system that determines the health of one or more resources used to process a transaction, business application, or other computer process. Performance data is generated in response to monitoring application execution and processed to determine and an actual and baseline value for resource usage data. Resource usage baseline data may be determined from previous resource usage data associated with a resource and particular transaction (a resource-transaction pair). The baseline values are compared to actual values to determine a deviation for the actual value. Deviation information for the time series data can be reported through an interface or some other manner.

EP 3 447 701 A1 discloses methods, systems, and apparatus, including computer programs encoded on a computer storage medium, for receiving training data for multiple datasets that include information about a computing process. The training data is received at a computing system that includes a data manager, a data classifier, and a machine learning (ML) system. The data classifier annotates the training data as being associated with a particular dataset and as being descriptive of computing processes executed to perform transactions. The ML system receives the annotated training data and data about a transaction operation of the system, trains a predictive model to generate prediction data that indicates a runtime condition of the system, and provides the prediction data to a process automation module of the system. The module executes process automation scripts to remediate the computing process, where the computing process is executed by the system to perform the real-time transaction operation.

### Summary of the invention

The invention relates to a computer-implemented method of monitoring the performance of a computing device and a monitoring station for monitoring the performance of a computing device, as defined in the appended claims.

Advantageously, using the method of the present invention it is possible to more reliably determine if there is any fault in a computing device processing a large volume of data. It is then therefore possible to take a corrective action to ensure that incoming requests are processed without significant delays.

The method comprises selecting a margin of error for the predicted device usage.

The prediction model is trained using machine learning techniques.

Preferably, raising an alert comprises sending an electronic notification to a control center.

Preferably, the plurality of requests are transactions processed by a payment network.

### Brief description of the drawings

Embodiments of the present invention are described below, by way of example only, with reference to the accompanying drawings, in which:
Fig. 1 shows a system for monitoring performance of computing devices in accordance to an aspect of the invention;
Fig. 2A is a graph depicting a relationship between a number of transactions and device usage of the computing device of Fig. 1;
Fig. 2B is a graph depicting a comparison of predicted and actual device usage based on historic data for the computing device of Fig. 1;
Fig. 2C is a graph depicting a relationship between a margin of error and prediction accuracy;
Fig. 2D is a graph depicting a comparison of predicted and actual device usage of the computing device of Fig. 1 in real time;
Fig. 3 is a flow diagram of steps of predicting device usage of the computing device of Fig. 1 using a prediction model;
Fig. 4 is a flow diagram of steps of monitoring the computing device of Fig. 1 in real time; and
Fig. 5 shows in schematic form a data processing device that is suitable for performing the functions of any data processing device within the system of Fig. 1.

### Detailed description

Various aspects of the invention are now described with reference to the accompanying drawings. The description and specific examples included herein are intended for purposes of illustration only and are not intended to limit the scope of the present disclosure.

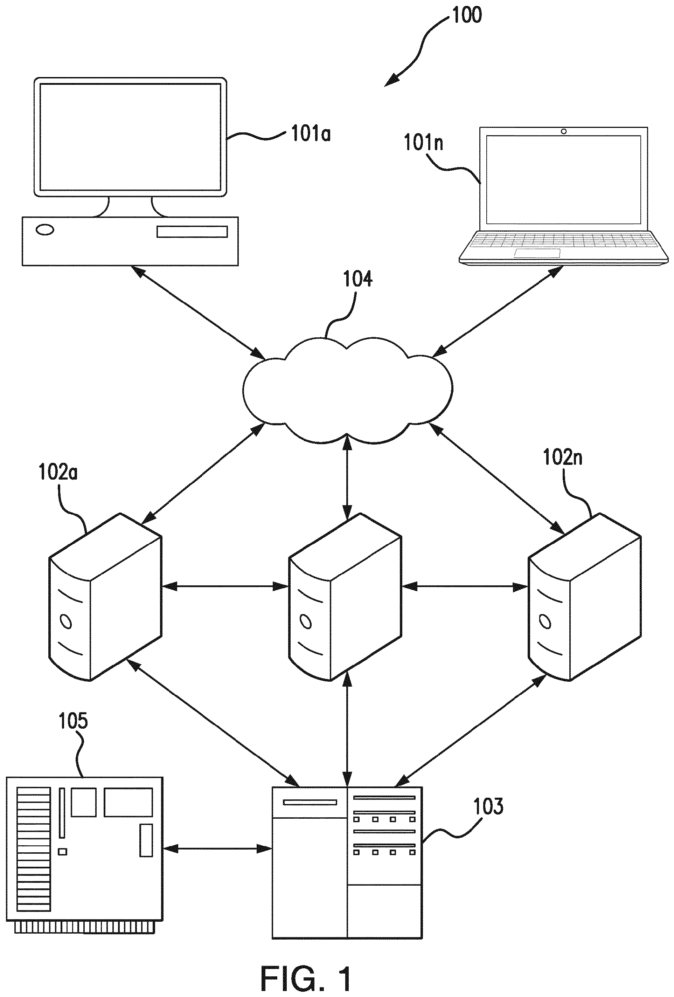

As shown in Fig. 1, a system 100 comprises a plurality of electronic devices 101a to 101n (hereinafter referred to as electronic device 101), a plurality of computing devices 102a to 102n (hereinafter referred to as the computing device 102), and at least one monitoring station 103 which may be connected to a control center 105. The electronic device 101 can be a personal computer, laptop, mobile, server, or any other data processing device capable of exchanging data with the computing device 102 over a network 104. The network 104 can either be a private secure network or a public network such as the internet. The computing device 102 can be a computer, a server or a cluster of servers capable of processing the data received from the electronic device 101. The monitoring station 103 can be one or more computers or data processing devices capable of constantly monitoring the performance of the computing device 102. It is to be understood that all the devices in the system 100 can be connected to one or more other devices and to the network 104 either wirelessly or through a wired connection.

Electronic device 101 is configured to make requests for service from the computing device 102. Each request may involve transmission of one or more electronic messages to the computing device 102 via the network 104. Each electronic message can contain information that must be processed by the computing device 102, and specifically requires a processor of the computing device 102 to perform one or more operations in order to process the electronic message. The current level of requests experienced by the computing device 102 may be termed a 'volume' of requests, which volume of requests produces a corresponding 'load' on the computing device 102.

The computing device 102 has a maximum processing capacity which translates to a maximum volume of requests that the computing device 102 can process per unit time. It is desirable to be able to distinguish between a situation where the computing device 102 has a load that is at or near maximum capacity owing to genuine high loading (i.e. a large volume of requests are currently being received via the network 104) and a situation where the computing device 102 has a processor load that is artificially high due to the computing device 102 having developed a fault, e.g. crashed or otherwise stopped operating correctly.

According to one aspect, the system 100 is a banking ecosystem in which the requests are transactions, e.g. authorization request and response messages transmitted over a payment network. While aspects of the invention are described below in this context, it will be appreciated that the invention has application in any client-server type environment where server loading is a pertinent parameter.

The electronic device 101 could be a consumer device making an online transaction, a merchant device requesting a transaction approval, a payment gateway, or any such device or combination of devices making some form of transaction through the banking system. To deal with such high volume of transaction data, the bank employs resources, such as the computing device 102, to constantly process these transactions. To ensure that these devices are performing optimally, the bank monitors the state of the computing device 102 through the monitoring station 103. A preferred way of monitoring the state or performance of the computing device 102 is to measure the device usage, which is defined as a percentage of utilization of device's central processing unit (CPU). A device with device usage close to 100% is said to be performing at its full capacity and is susceptible to breakdown if overloaded. However, the device could also exhibit high device usage due to a fault. Therefore, it is important to keep the device usage under check to ensure that all computing devices 102 in the system 100 keep functioning correctly.

During certain periods, such as sale or holiday season, one or more computing devices 102 may exhibit high device usage for extended period of time due to an increased volume of transactions. However, generally, the monitoring station 103 has no way to ascertain if the high device usage is genuine or due to a fault in the device. The monitoring station 103 may raise a misleading alert when the high device usage is genuine and may miss raising an alert when it is due to a fault in the device.

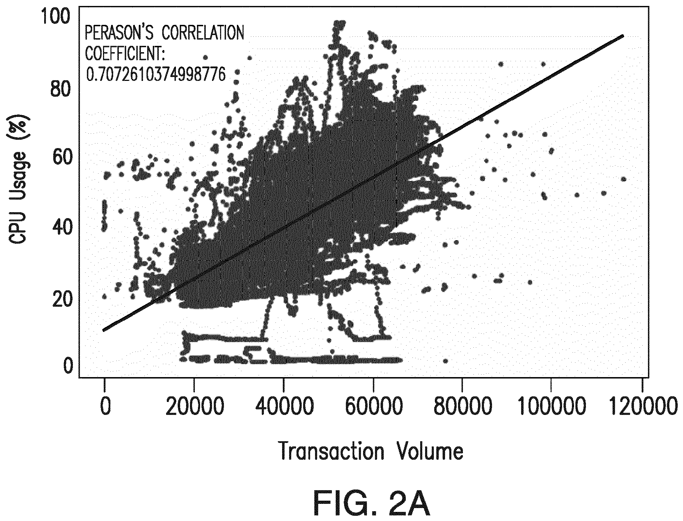

To address this issue, the monitoring system 103 of the present invention monitors the device usage using a prediction model. The prediction model is based on an observation that the there is a direct correlation between the transaction volume and the device usage. As shown in Fig. 2A, when transaction volume (in actual numbers) on X-axis is plotted against CPU usage (in percentage) on Y-axis, a direct correlation is observed between the two parameters. This correlation is verified using Pearson's correlation method, known in the art, and a Pearson's correlation coefficient is calculated. The coefficient value, r, ranges from -1 to +1, a value close to '1' indicating a strong positive correlation. In the present case, the value r was found to be approximately 0.7, which verifies that the device usage increases with an increase in the transaction volume. Using this established fact, it is possible to predict device usage given an X number of transactions at any given time.

To build the prediction model, historic data of transactions and corresponding device usage is obtained from the monitoring station 103 or historic records stored elsewhere. In the present embodiment, a linear regression model was built and trained using machine learning techniques to predict the device usage based on the historic data. It is to be understood that other known algorithms or techniques may be used to build and train a prediction model.

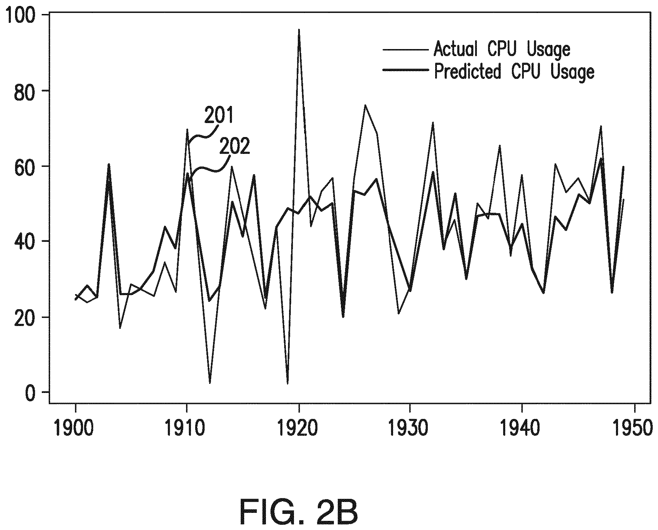

As shown in Fig. 2B, with time on X-axis and CPU usage on Y-axis, both actual CPU usage and predicted CPU usage were plotted. Line 201 shows the actual device usage and line 202 shows the predicted device usage. Although the predicted device usage fairly matches the actual device usage for most years, there are some anomalies or irregularities. Mostly, as can be seen in the graph, the predicted device usage is lower than the actual device usage.

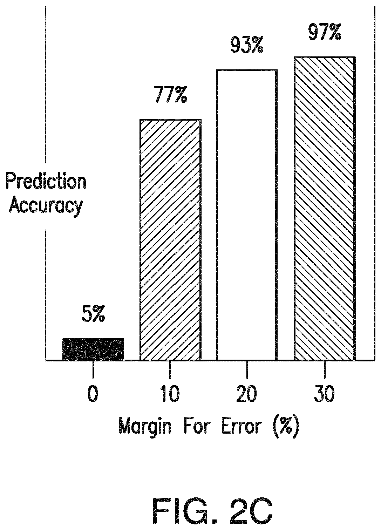

Fig. 2C shows a bar chart with margin of error (in percentage) on X-axis plotted against prediction accuracy (in percentage) on Y-axis. It is observed that with 30% margin of error, prediction accuracy is quite high at 97%. However, even at 20% margin of error, prediction accuracy is relatively high at 93%. Therefore, depending on requirements, a certain margin of error can be introduced in prediction results. By using a margin of error, not only more accurate predictions can be made but it is also possible to define a safe working range for the computing device 102.

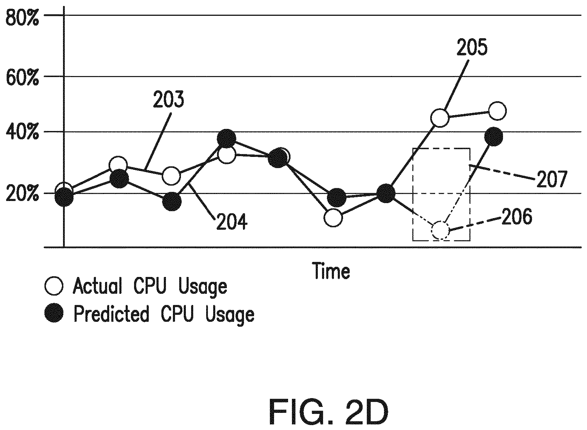

Fig. 2D is a graph showing predicted and actual device usage in real time. With time on X-axis and CPU usage on Y-axis, it can be seen that the actual CPU usage (shown by line 203) closely follows the predicted CPU usage (shown by line 204). When the actual device usage falls below the predicted value, there is no concern as the device is performing under its capacity. However, when the actual device usage is higher than the predicted value, and in the preferred case outside the margin for error associated with the predicted value, it may indicate a fault with the computing device 102. A difference between the actual and predicted device usage is determined and if that difference is within an allowable margin of error then it is considered normal device behavior. However, if the difference is outside the margin of error, then abnormal system behavior is recorded by the monitoring station 103 and an alert is raised. This scenario is shown in Fig. 2D at actual usage data point 205, with the margin for error (30% in this example) on predicted usage data point 206 being illustrated as a shaded region 207.

Therefore, using the prediction model it is possible to accurately determine by the monitoring station 103 when the computing device 102 is likely to be exhibiting abnormal behavior due to a fault. It is then possible to take a corrective action before the device stops functioning. This minimizes chances of complete breakdown and ensures efficient and smooth running of the system 100. Corrective action can include any one or more of: transmitting, by the monitoring station 103, an electronic notification message to the control center 105 associated with the monitoring station 103 informing the control center 105 of a potential fault; changing, by the monitoring station 103 or the control center, an operational status of the computing device 102 to 'offline' such that no further requests are routed to the computing device 102; redirecting, by the monitoring station 103 or the control center 105, one or more requests originally directed to the computing device 102 to another computing device (e.g. another computing device within a cluster server); and/or requesting, by the monitoring station 103 or the control center 105, that one or more additional computational resources be made available in the system 100 of Fig. 1 (e.g. requesting one or more servers be added to a cluster server). Any corrective action may be taken automatically by the monitoring station 103 and/or the control center 105 upon detection of a discrepancy between the predicted usage and actual usage that is outside the margin for error.

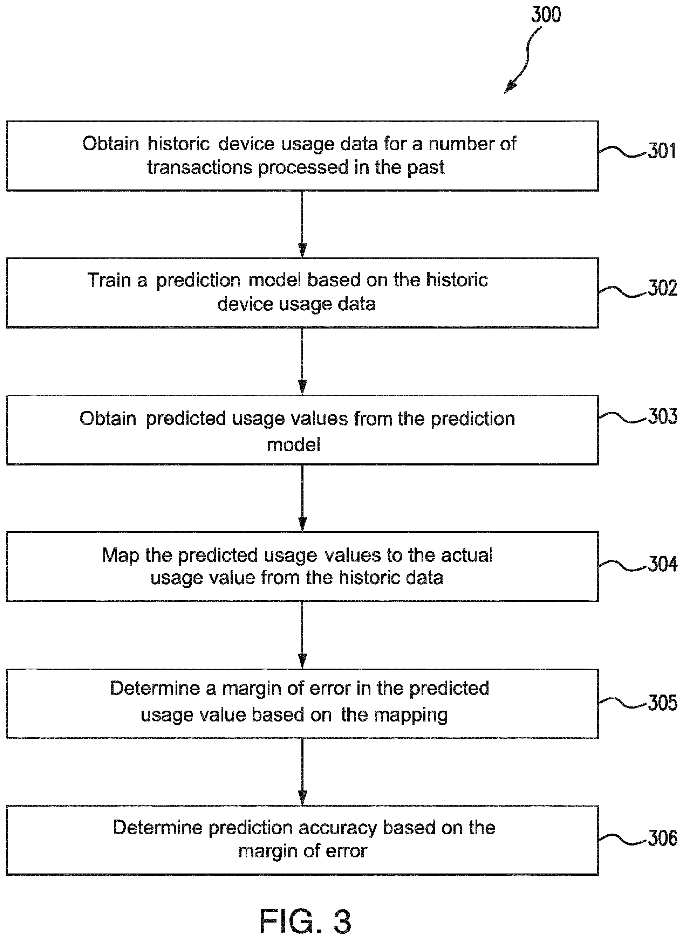

Fig. 3 shows a flow diagram of a process 300 of predicting device usage. At step 301, historic usage data for a number of transactions processed in the past is obtained. For example, the monitoring station 103 may store all past data of transactions over years. It may be needed to cleanse and validate the historic data, in case some records were recorded with errors.

At step 302, a prediction model is trained based on the historic device usage data. The prediction model may be a linear regression model that is built and is trained with the historic usage data using machine learning techniques. Preferably, the model is constantly trained by feeding in new data as obtained. With such continual learning, the model gets increasingly well-trained over time and predicts device usage with a high degree of accuracy.

At step 303, predicted device usage values are obtained from the prediction model The linear regression model may be used to predict device usage values for each of a set of time intervals in the historic data. The model predicts an expected device usage based on the number of transactions for that time interval .

At step 304, predicted usage values are mapped onto the historic actual usage values. For example, the obtained predicted device usage values may be plotted along with the historic usage values over the recorded time interval to see how accurately the prediction model has predicted the usage values.

At step 305, a margin of error in the predicted usage value is determined. The margin of error may be introduced in the predicted device usage depending on the degree of accuracy required. For example, a margin of error in the range of 10% to 30% may be introduced in the predicted device usage, which is still a reasonably high confidence in the predicted values. It will be appreciated that the values for margin of error provided here are purely exemplary and that any margin for error value can be selected by the skilled person in accordance with the specifics of a given situation. The margin for error value is selected so that the discrepancy between the predicted loading of the computing device 102 and the actual loading of the computing device 102 is within the margin for error in a high percentage of cases, e.g. 80%, 85%, 90%, 95%, 99% of cases.

At step 306, prediction accuracy is determined based on the margin of error. In one embodiment, different percentages of margin of error are introduced in the predicted values to determine prediction accuracy when a specific margin of error is selected. As described above with reference to Fig. 2C, when no margin of error is introduced, the confidence in prediction accuracy is mere 5% but with a margin of error at 30%, the confidence in predication accuracy is as high as 97%. In other words, confidence in prediction accuracy is a measure of the sensitivity of the monitoring station 103. Greater the margin of error, lower the sensitivity of the monitoring station 103 to discrepancies between the predicted and actual CPU usage. It has been found that, in the case of a payment network over which financial transactions are performed, a margin of error in the range of 10%-30%provide an appropriate sensitivity of the monitoring station 103 for determining a fault in the computing device 102. Suitable margin of error values will be determinable by the skilled person when implementing the invention in other contexts.

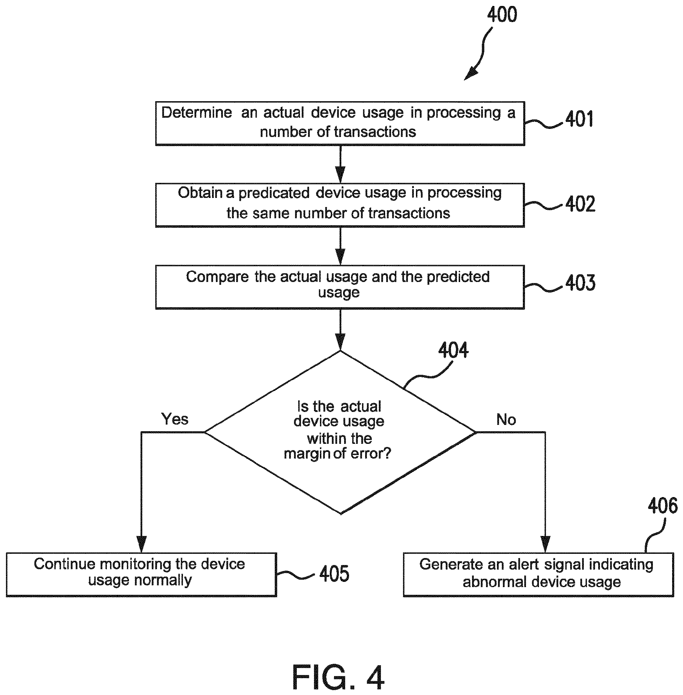

Fig. 4 is a flow diagram for a process 400 of monitoring device usage using a prediction model in real time. At step 401, an actual device usage in processing a number of transactions is determined. The monitoring station 103 may determine an actual device usage of the computing device 102 when the computer device 102 is processing a number of transactions in real time. The actual device usage is the percentage of CPU processing power being used currently by the device 102. It is in the range of 0-100%, where a value close to 0 means the device is in idle state (or turned OFF) and a value close to 100 means the device is operating at almost its full capacity.

At step 402, a predicted device usage for processing the same number of transactions is obtained. The monitoring station 103 may obtain a predicted device usage for processing the same number of transactions as in step 401 using the prediction model as described above. The monitoring station 103 preferably runs an algorithm based on the prediction model to obtain predicted device usage when a certain number of transactions are to be processed by the device 102. Alternatively, the monitoring station 103 may obtain the predictions from another device connected to the monitoring station 103.

At step 403, the actual and predicted usage values are compared. The monitoring station 103 compares the actual usage values with the predicted usage values and computes a difference in the two. The difference is preferably expressed as a percentage.

At step 404, it is determined if the actual device usage is within the margin of error. As described above the monitoring station 103 introduces a margin for error in the predicted usage. This is to account for irregularities in the predictions and ascertaining a level of confidence in them. The monitoring station 103 compares the difference obtained in step 404 with a predetermined margin of error. If the actual device usage is within the margin of error, then the process proceed to step 405 else it proceeds to step 406.

At step 405, device usage monitoring is continued in a normal manner. Upon determining that the difference is within the acceptable margin of error, the monitoring station 103 may take no special action and simply continues monitoring the device 102 in the next period.

At step 406, an alert signal is generated indicating abnormal device usage. Upon determining that the difference is outside the acceptable margin of error, the monitoring station 103 generates an alert signal to indicate that the computing device 102 may be exhibiting abnormal behavior. This could be due to a fault or any other reason but not likely due to genuinely high volume of transactions as the predictions suggest otherwise. The monitoring station 103 may trigger a visual, audio, or audio-visual alarm to alert monitoring staff of the abnormality. The monitoring station 103 may also send an electronic notification to the control center 105 of the bank alerting them of the situation. Other actions as detailed earlier in this specification may additionally or alternatively be taken by monitoring station 103 and/or the control center 105. These actions may be taken automatically.

In this way, it is possible to reliably predict a fault in the computing device 102 and take a corrective action, for example, by offloading the device 102, to ensure smooth functioning of the system 100. Moreover, as compared to setting threshold or usage limit manually, the monitoring method and system of the present invention will learn the normal or safe usage of the devices overtime and set the threshold accordingly. This will therefore lead to better utilization of resources and efficient processing of data without compromising device safety.

It is to be understood that the above described invention can also be applicable to establishments other than banks, for example, telecoms, power supply, and the like.

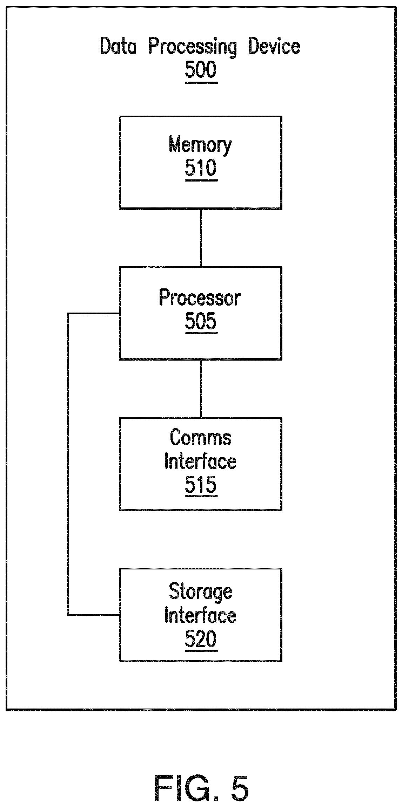

It will be appreciated that any of the methods described herein, and any particular step of said methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of a method may be implemented by different processors that are all collectively acting in accordance with computer-readable instructions stored on one or more storage media. The processor or processors may be component(s) of system 100, for example a processor of the electronic device 101, the computing device 102, the monitoring station 103, and the control center 105. Equally, any steps of any of the methods described herein may be performed by data processing devices as described in respect of system 100 of Fig. 1. By way of example, Fig. 5 shows in schematic form a data processing device 500 that is suitable for performing the functions of the processing devices and servers in the system 100.

Data processing device 500 includes a processor 505 for executing instructions. Instructions may be stored in a memory 510, for example. Processor 505 may include one or more processing units (e.g., in a multi-core configuration) for executing instructions. The instructions may be executed within a variety of different operating systems on the data processing device 500, such as UNIX, LINUX, Microsoft Windows^{®}, etc. More specifically, the instructions may cause various data manipulations on data stored in memory 510 (e.g., create, read, update, and delete procedures). It should also be appreciated that upon initiation of a computer-implemented method, various instructions may be executed during initialization. Some operations may be required in order to perform one or more methods described herein, while other operations may be more general and/or specific to a particular programming language (e.g., C, C#, C++, Java, or other suitable programming languages, etc.).

Processor 505 is operatively coupled to a communication interface 515 such that data processing device 500 is capable of communicating with a remote device, such as another data processing device of system 100. For example, communication interface 515 may receive communications from another member of system 100 over the network, depending on the function of data processing device 500 within the context of system 100.

Processor 505 may also be operatively coupled to a storage device, depending on the function of data processing device 500 within the context of system 100. The storage device is any computer-operated hardware suitable for storing and/or retrieving data, where in the case of a secure storage medium the data is stored and retrieved securely.

Storage device can be integrated in data processing device 500, or it can be external to data processing device 500 and located remotely. For example, data processing device 500 may include one or more hard disk drives as a storage device. Alternatively, where the storage device is external to data processing device 500, it can comprise multiple storage units such as hard disks or solid state disks in a redundant array of inexpensive disks (RAID) configuration. The storage device may include a storage area network (SAN) and/or a network attached storage (NAS) system.

Processor 505 can be operatively coupled to the storage device via a storage interface 520. Storage interface 520 is any component capable of providing processor 505 with access to the storage device. Storage interface 520 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 505 with access to the storage device.

Memory 510 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense. While the disclosure has been described in terms of various specific embodiments, those skilled in the art will recognize that the disclosure can be practiced with modification within the scope of the claims.

As used herein, the term "non-transitory computer-readable media" is intended to be representative of any tangible computer-based device implemented in any method or technology for short-term and long-term storage of information, such as, computer-readable instructions, data structures, program modules and submodules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof, wherein the technical effect is enabling sensitive data such a cryptogram to be passed to the devices in a secure manner. Any such resulting program, having computer-readable code means, may be embodied or provided within one or more computer readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A computer-implemented method of monitoring the performance of a computing device (102), the method comprising:
determining (401) an actual device usage of the computing device (102) for processing a plurality of requests;
obtaining (402) a predicted device usage of the computing device (102) for processing the plurality of requests by inputting a request volume of the plurality of requests into a model of the operation of the computing device (102), wherein the model is a prediction model built using historic device usage data for requests processed in the past, and wherein the prediction model is trained with the historic device usage data using machine learning techniques;
comparing (403) the actual device usage and the predicted device usage to compute a difference between the actual device usage and the predicted device usage;
selecting a margin of error for the predicted device usage by identifying a margin of error value for the historic device usage data for which the difference between the actual device usage and the predicted device usage is within the margin for error in 80-99% of cases; and
raising an alert (406) if the actual device usage is greater than the predicted device usage and the difference between the actual device usage and the predicted device usage is not within the margin of error.

2. The method of claim 1, further comprising computing prediction accuracy based on the margin of error.

3. The method of any preceding claim, wherein the prediction model is a linear regression model trained using machine learning techniques.

4. The method of any preceding claim, wherein the step of raising an alert comprises sending an electronic notification to a control center (105).

5. The method of any preceding claim, wherein the plurality of requests are transactions processed by a payment network.

6. A monitoring station (103) for monitoring the performance of a computing device (102) comprising:
a memory (510); and
one or more processors (505) configured to:
determine an actual device usage of the computing device (102) for processing a plurality of requests;
obtain a predicted device usage of the computing device (102) for processing the plurality of requests by inputting a request volume of the plurality of requests into a model of the operation of the computing device (102), wherein the model is a prediction model built using historic device usage data for requests processed in the past, and wherein the prediction model is trained with the historic device usage data using machine learning techniques;
compare the actual device usage and the predicted device usage to compute a difference between the actual device usage and the predicted device usage;
select a margin of error for the predicted device usage by identifying an acceptable margin of error value for the historic device usage data for which the difference between the actual device usage and the predicted device usage is within the margin for error in 80-99% of cases; and
raise an alert if the actual device usage is greater than the predicted device usage and the difference between the actual device usage and the predicted device usage is not within the margin of error.

7. The monitoring station (103) of claim 6, wherein the prediction model is a linear regression model trained using machine learning techniques.

8. The monitoring station (103) of any one of claims 6 or 7, wherein the processor (505) is further configured to send an electronic notification to a control center (105).

9. The monitoring station (103) of any one of claims 6 to 8, wherein the plurality of requests are transactions processed by a payment network.

## Patentansprüche

1. Computerimplementiertes Verfahren zum Überwachen der Leistung einer Rechenvorrichtung (102), wobei das Verfahren umfasst:
Bestimmen (401) einer tatsächlichen Vorrichtungsnutzung der Rechenvorrichtung (102) zur Verarbeitung einer Vielzahl von Anfragen;
Erhalten (402) einer vorhergesagten Vorrichtungsnutzung der Rechenvorrichtung (102) zur Verarbeitung der Vielzahl von Anfragen durch Eingeben eines Anfragevolumens der Vielzahl von Anfragen in ein Modell des Betriebs der Rechenvorrichtung (102), wobei das Modell ein Vorhersagemodell ist, das unter Verwendung historischer Vorrichtungsnutzungsdaten für in der Vergangenheit verarbeitete Anfragen erstellt wurde, und wobei das Vorhersagemodell mit den historischen Vorrichtungsnutzungsdaten unter Verwendung von maschinellen Lerntechniken trainiert wird;
Vergleichen (403) der tatsächlichen Vorrichtungsnutzung und der vorhergesagten Vorrichtungsnutzung, um eine Differenz zwischen der tatsächlichen Vorrichtungsnutzung und der vorhergesagten Vorrichtungsnutzung zu berechnen;
Auswählen einer Fehlerspanne für die vorhergesagte Vorrichtungsnutzung durch Identifizieren eines Fehlerspannenwerts für die historischen Vorrichtungsnutzungsdaten, bei denen die Differenz zwischen der tatsächlichen Vorrichtungsnutzung und der vorhergesagten Vorrichtungsnutzung in 80-99 % der Fälle innerhalb der Fehlerspanne liegt; und
Auslösen einer Warnung (406), wenn die tatsächliche Vorrichtungsnutzung größer als die vorhergesagte Vorrichtungsnutzung ist und die Differenz zwischen der tatsächlichen Vorrichtungsnutzung und der vorhergesagten Vorrichtungsnutzung nicht innerhalb der Fehlerspanne liegt.

2. Verfahren nach Anspruch 1, weiter umfassend das Berechnen der Vorhersagegenauigkeit auf der Grundlage der Fehlerspanne.

3. Verfahren nach einem vorstehenden Anspruch, wobei das Vorhersagemodell ein lineares Regressionsmodell ist, das unter Verwendung von maschinellen Lerntechniken trainiert wird.

4. Verfahren nach einem vorstehenden Anspruch, wobei der Schritt zum Auslösen einer Warnung das Senden einer elektronischen Benachrichtigung an eine Steuerzentrale (105) umfasst.

5. Verfahren nach einem vorstehenden Anspruch, wobei die Vielzahl von Anfragen Transaktionen sind, die von einem Zahlungsnetz verarbeitet werden.

6. Überwachungsstation (103) zum Überwachen der Leistung einer Rechenvorrichtung (102), umfassend:
einen Speicher (510); und
einen oder mehrere Prozessoren (505), die ausgebildet sind, um:
eine tatsächliche Vorrichtungsnutzung der Rechenvorrichtung (102) zur Verarbeitung einer Vielzahl von Anfragen zu bestimmen;
eine vorhergesagte Vorrichtungsnutzung der Rechenvorrichtung (102) zum Verarbeiten der Vielzahl von Anfragen durch Eingeben eines Anfragevolumens der Vielzahl von Anfragen in ein Modell des Betriebs der Rechenvorrichtung (102) zu erhalten, wobei das Modell ein Vorhersagemodell ist, das unter Verwendung historischer Vorrichtungsnutzungsdaten für in der Vergangenheit verarbeitete Anfragen erstellt wurde, und wobei das Vorhersagemodell mit den historischen Vorrichtungsnutzungsdaten unter Verwendung von maschinellen Lerntechniken trainiert wird;
die tatsächliche Vorrichtungsnutzung und die vorhergesagte Vorrichtungsnutzung zu vergleichen, um eine Differenz zwischen der tatsächlichen Vorrichtungsnutzung und der vorhergesagten Vorrichtungsnutzung zu berechnen;
eine Fehlerspanne für die vorhergesagte Vorrichtungsnutzung durch Identifizieren eines akzeptablen Fehlerspannenwerts für die historischen Vorrichtungsnutzungsdaten auszuwählen, bei denen die Differenz zwischen der tatsächlichen Vorrichtungsnutzung und der vorhergesagten Vorrichtungsnutzung in 80-99 % der Fälle innerhalb der Fehlerspanne liegt; und
eine Warnung auszulösen, wenn die tatsächliche Vorrichtungsnutzung größer als die vorhergesagte Vorrichtungsnutzung ist und die Differenz zwischen der tatsächlichen Vorrichtungsnutzung und der vorhergesagten Vorrichtungsnutzung nicht innerhalb der Fehlerspanne liegt.

7. Überwachungsstation (103) nach Anspruch 6, wobei das Vorhersagemodell ein lineares Regressionsmodell ist, das unter Verwendung von maschinellen Lerntechniken trainiert wird.

8. Überwachungsstation (103) nach einem der Ansprüche 6 oder 7, wobei der Prozessor (505) weiter ausgebildet ist, um eine elektronische Benachrichtigung an eine Steuerzentrale (105) zu senden.

9. Überwachungsstation (103) nach einem der Ansprüche 6 bis 8, wobei die Vielzahl von Anfragen Transaktionen sind, die von einem Zahlungsnetz verarbeitet werden.

## Revendications

1. Procédé mis en œuvre par ordinateur de surveillance des performances d'un dispositif informatique (102), le procédé comprenant :
la détermination (401) d'une utilisation réelle de dispositif du dispositif informatique (102) pour traiter une pluralité de requêtes ;
l'obtention (402) d'une utilisation prédite de dispositif du dispositif informatique (102) pour traiter la pluralité de requêtes par entrée d'un volume de requête de la pluralité de requêtes dans un modèle du fonctionnement du dispositif informatique (102), dans lequel le modèle est un modèle de prédiction construit en utilisant des données historiques d'utilisation de dispositif pour des requêtes traitées par le passé, et dans lequel le modèle de prédiction est entraîné avec les données historiques d'utilisation de dispositif en utilisant des techniques d'apprentissage automatique ;
la comparaison (403) de l'utilisation réelle de dispositif et de l'utilisation prédite de dispositif pour calculer une différence entre l'utilisation réelle de dispositif et l'utilisation prédite de dispositif ;
la sélection d'une marge d'erreur pour l'utilisation prédite de dispositif par identification d'une valeur de marge d'erreur pour les données historiques d'utilisation de dispositif pour lesquelles la différence entre l'utilisation réelle de dispositif et l'utilisation prédite de dispositif se situe dans la marge d'erreur dans 80 à 99 % des cas ; et
le déclenchement d'une alerte (406) si l'utilisation réelle de dispositif est supérieure à l'utilisation prédite de dispositif et que la différence entre l'utilisation réelle de dispositif et l'utilisation prédite de dispositif ne se situe pas dans la marge d'erreur.

2. Procédé selon la revendication 1, comprenant en outre le calcul d'une précision de prédiction sur la base de la marge d'erreur.

3. Procédé selon une quelconque revendication précédente, dans lequel le modèle de prédiction est un modèle de régression linéaire entraîné en utilisant des techniques d'apprentissage automatique.

4. Procédé selon une quelconque revendication précédente, dans lequel l'étape de déclenchement d'une alerte comprend l'envoi d'une notification électronique à un centre de commande (105).

5. Procédé selon une quelconque revendication précédente, dans lequel la pluralité de requêtes sont des transactions traitées par un réseau de paiement.

6. Station de surveillance (103) pour surveiller les performances d'un dispositif informatique (102) comprenant :
une mémoire (510) ; et
un ou plusieurs processeurs (505) configurés pour :
déterminer une utilisation réelle de dispositif du dispositif informatique (102) pour traiter une pluralité de requêtes ;
obtenir une utilisation prédite de dispositif du dispositif informatique (102) pour traiter la pluralité de requêtes par entrée d'un volume de requête de la pluralité de requêtes dans un modèle du fonctionnement du dispositif informatique (102),
dans lequel le modèle est un modèle de prédiction construit en utilisant des données historiques d'utilisation de dispositif pour des requêtes traitées par le passé, et dans lequel le modèle de prédiction est entraîné avec les données historiques d'utilisation de dispositif en utilisant des techniques d'apprentissage automatique ;
comparer l'utilisation réelle de dispositif et l'utilisation prédite de dispositif pour calculer une différence entre l'utilisation réelle de dispositif et l'utilisation prédite de dispositif ;
sélectionner une marge d'erreur pour l'utilisation prédite de dispositif en identifiant une valeur de marge d'erreur acceptable pour les données historiques d'utilisation de dispositif pour lesquelles la différence entre l'utilisation réelle de dispositif et l'utilisation prédite de dispositif se situe dans la marge d'erreur dans 80 à 99 % des cas ; et
déclencher une alerte si l'utilisation réelle de dispositif est supérieure à l'utilisation prédite de dispositif et que la différence entre l'utilisation réelle de dispositif et l'utilisation prédite de dispositif ne se situe pas dans la marge d'erreur.

7. Station de surveillance (103) selon la revendication 6, dans lequel le modèle de prédiction est un modèle de régression linéaire entraîné en utilisant des techniques d'apprentissage automatique.

8. Station de surveillance (103) selon l'une quelconque des revendications 6 ou 7, dans lequel le processeur (505) est en outre configuré pour envoyer une notification électronique à un centre de commande (105).

9. Station de surveillance (103) selon l'une quelconque des revendications 6 à 8, dans lequel la pluralité de requêtes sont des transactions traitées par un réseau de paiement.
